# EUROPEAN PATENT APPLICATION

(11) **EP 2 281 469 A1**
(43) Date of publication of application: **09.02.2011**
(21) Application number: 08765255.8
(22) Date of filing: 06.06.2008
(51) Int. Cl.: A23N 12/08, A23F 5/04, A23N 12/12

(54) **METHOD AND DEVICE FOR ROASTING/COOLING BEAN**

(71) Applicant: Mayekawa Mfg. Co., Ltd., Koto-ku Tokyo 135-8482 (JP)
(72) Inventor: KANDO, Masanori, Tokyo 135-8482 (JP); KISHIMOTO, Akira, Tokyo 135-8482 (JP); KATSURAGI, Yasutaka, Tokyo 135-8482 (JP)
(74) Representative: Collin, Jérôme
(86) International application number: PCT/JP2008/060442
(87) International publication number: WO 2009/147743

(57) **Abstract**

Operation of roasting machine is stabilized by controlling the flow rate or the temperature of cold air for cooling with high precision when roasted beans are cooled, and efficient roasting/cooling operation is attained at a low cost. In the roasting/cooling method of beans for quickly cooling roasted beans by circulating cold air for cooling while closing the cold air from the outdoor air, the cold air for cooling is cooled by cryogenic brine in a heat exchanger (31) provided in the closed circulation path (30) for the cold air for cooling, inlet temperature of a cooling tank (20) of the cold air for cooling is detected, the flow rate or temperature of cryogenic brine being supplied to the heat exchanger (31) is controlled such that the detected inlet temperature has a set value, the quantity of circulation and the pressure of the cold air in the closed circulation path are controlled by blowers (32, 33) provided in the closed circulation path (30), respectively, on the upstream side and downstream side of the heat exchanger, and cooling of a front batch and precooling of the cooling tank (20) after roasting are carried out in the same time zone as that of roasting of every batch by the roasting machine (11) thus achieving continuous roasting/cooling processing.

## Description

### BACKGROUND OF THE INVENTION

### Field of the Invention

The present invention relates to a method and a device for roasting/cooling beans in a cooling process of the beans immediately after being roasted by circulating cold air while closing the cold air from outside and by stabilizing the supply of the cold air, thereby stabilizing operation of a roasting machine and enhancing aroma and flavor of the roasted beans.

### Description of the Related Art

Conventionally, roasted beans for coffee are produced by performing a roasting step of roasting beans and then a cooling step of cooling beans immediately after being roasted. In the roasting step, beans are roasted in the roasting machine of a hot-air drum for about ten minutes by hot air having a temperature of 400 to 500°C so as to make roasted beans having a temperature of 200°C.
And, in the cooling step, the roasted beans immediately after the roasting step are cooled with the cold air for about five minutes to room temperature of approximately 20°C.

The flavor of coffee made through the conventional roasting/cooling steps is changed by the chemical reaction that takes place within the beans during the roasting step. The flavor changes due to dissipation of aroma elements and the chemical reaction as the time progresses after the roasting step. Further, residual heat after the roasting step may cause dissipation of the aroma elements and secondary roasting, which leads to uneven roasting of the beans.

Furthermore, fresh coffee is very aromatic and when hot water is poured onto coffee powder for drip brew, the powder gets substantially distended, causing a top surface thereof to rise. In contrast, old coffee shows no raise on the top surface when dripping the coffee and has little aroma. This raise on the top surface when dripping the coffee seems to result from carbon dioxide contained in the ground beans. As the ground beans get older, carbon dioxide dissipates as well as the aroma. This means that the amount of carbon dioxide contained in the ground beans indicates the strength of the aroma.

As described above, the aroma and flavor of coffee is caused by dissipation of aroma elements or carbon dioxide and the chemical reaction thereof. In other words, the aroma and flavor of coffee depends on the cooling step performed immediately after roasting the beans and a storage step performed after the cooling step.

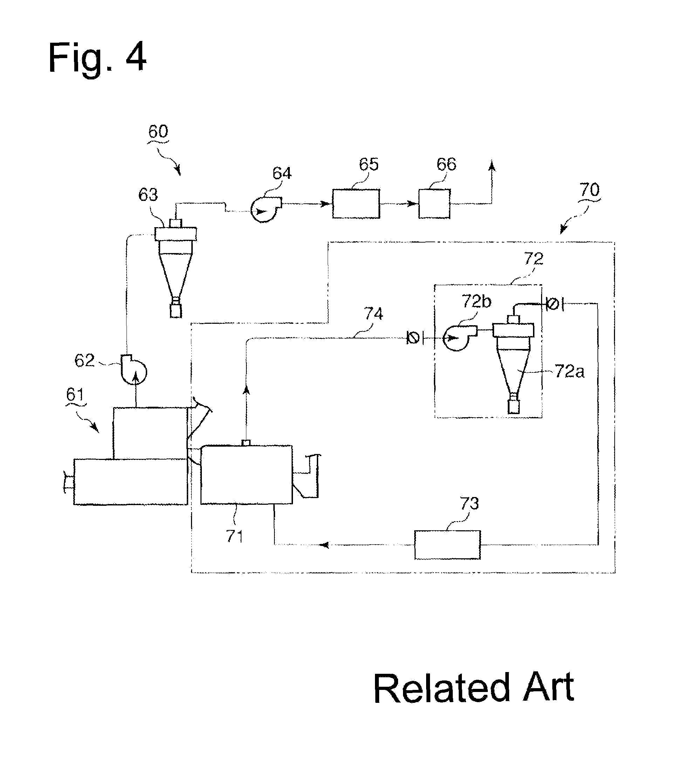

Patent Document 1(JP11-9246A) proposes a method and device for cooling beans which can retain high aroma and flavor of roasted beans such as coffee beans and also reduces the operation cost of roasting and cooling the beans. Hereinafter, this roasting/cooling device is explained in reference to FIG.4.

FIG. 4 illustrates a roasting/cooling machine 60 mainly consisting of a cooling device 70 and a roasting device 60 formed by a roasting device 61, an intake fan 62 for drawing in discharge air being discharged from the roasting device 61, a centrifugal separator 63 for removing dust from the discharge air introduced from the intake fan 62, a filter-type dust collector 65 for collecting the dust removed by the centrifugal separator 63 through fan 64, a deodorizer 66 for deodorizing the discharge air after collecting the dust.

The cooling device 70 is formed by a cooling tank 71, a dust collecting unit 72 including a dust collector 72a and a high pressure fan 72b, a cold air generator 73, and a closed circulation path for cold air 74 for connecting these devices. The closed circulation path for cold air 74 forms an enclosed cooling space.

With this structure, the roasting beans immediately after being roasted is rapidly cooled with the cold air of low temperature by the cold air generator 73 provided in the enclosed cooling space that is hermetically closed by the closed circulation path 74. Therefore, the beans are not influenced by the temperature change of the outdoor air and the cooling step is performed in a stable manner while chemical reaction of the aroma elements is ceased and generation of volatile content containing the aroma element is suppressed and the dissipation of the aroma element and dissipation of gas such as carbon dioxide contained in the beans are prevented. Specifically, as the closed circulation path forms the enclosed space therein, the aroma element, which temporarily comes out from the roasted beans, returns to the roast beans by the circulation air and again absorbed in the roasted beans.

Moreover, the residual heat after roasting the bean is quickly removed so as to prevent uneven roasting of the beans. Further, the deodorizer 66 is used solely for the roasting step and thus the operation cost can be reduced.

[Patent Document 1] JP11-9246A

### SUMMARY OF THE INVENTION

As described above, the roasting/cooling device disclosed in Patent Document 1 has many advantages, and yet the recent escalating prices for crude oil promotes the trend for cheaper running cost of the device. Therefore, more efficient and cheaper operations of the device are desired.

In view of the problems above, it is an object of the present invention to achieve efficient and cheaper operations of a roasting/cooling device which cools roasted beans with cold air for cooling in a circulation path closed from outdoor air by precisely controlling the flow amount and temperature of the cold air during the cooling of the beans and stabilizing the operations of the roasting/cooling device.

### [Means to solve the problems]

To achieve the object, the present invention proposes a roasting/cooling method for roasting beans and rapidly cooling the roasted beans in a cooling tank that is arranged in a closed circulation path for cold air by circulating the cold air in the closed circulation path, the method comprising the steps of: cooling the cold air with cryogenic brine in a heat exchanger arranged in the closed circulation path for the cold air; detecting a temperature of the cold air at an inlet of the cooling tank; controlling flow rate or temperature of the cryogenic brine being supplied to the heat exchanger so that the detected temperature of the cold air becomes a set temperature; controlling a circulating amount and pressure of the cold air in the closed circulation path by blowers that are respectively provided in the closed circulation path on an upstream side and a downstream side of the heat exchanger; and cooling a batch of the beans having been roasted simultaneously with roasting of a next batch of the beans by a roasting device so as to perform a roasting/cooling process of the beans in a continuous manner.

By rapidly cooling the roasted beans, the dissipation of the aroma element is prevented and the high aroma and flavor remain in the beans. According to the method of the present invention, the cryogenic brine is used instead of refrigerant of the conventional refrigeration device and thus the rapid cooling and the stable control of the temperature of the cold air can be achieved. Further, the temperature of the cold air at the inlet of the cooling tank is detected and the flow rate and temperature of the cryogenic brine being supplied to the heat exchanger is controlled so that the detected temperature becomes a set temperature. In this manner, the temperature of the cold air for cooling can be controlled with high precision.

Inside the heat exchanger, the circulation air for cooling is rapidly cooled by heat exchange with the cryogenic brine, which causes static pressure difference of the cold air between the upstream side and the downstream side of the heat exchanger, and further, the pressure of the cold air is expected to be negative at the outlet of the heat exchanger due to the pressure loss of the cold air passing through the heat exchanger in addition to the pressure difference. Especially, when cooling the beans immediately after roasting, the temperature of the air is about 80°C at the inlet of the heat exchanger and becomes about 5°C at the outlet thereof. Therefore, in order to stabilize the circulation of the cold air without causing adverse effects of the high negative pressure in the closed circulation path, a pair of blowers are respectively arranged in the closed circulation path on the upstream side and the downstream side of the heat exchanger and the flow rate of each of the blowers is controlled so as to maintain the pressure of the cold air at the outlet of the heat exchanger to be about the pressure of the ambient air.

By this, the cooling of the roasted beans is stabilized and the roasting of the beans of a next bath is performed simultaneously with cooling of a batch of the beans having been roasted, preferably simultaneously with a combination of precooling of the cooling tank and the cooling of the roasted beans so as to perform the rapid cooling of the roasted beans and a roasting/cooling process of the beans in a continuous manner. Therefore, the roasting/cooling process can be performed in a continuous manner, and efficient operations of the device can be achieved at a low cost.

Moreover, the roasted beans immediately after roasting are rapidly cooled by the cold air of low temperature in the cooling tank arranged in the space hermetically closed in the closed circulation path. Therefore, without being influenced by the temperature fluctuation of the outdoor air, the cooling of the beans can be firmly performed and a chemical reaction of the aroma element within the roasted beans is ceased and generation of volatile matter contents including the aroma element can be suppressed. Furthermore, the aroma element that has once left the beans, circulates in the closed circulation path and returns to the cooling tank where it is absorbed in the beans again. In this manner, the dissipation of the aroma element and gas such as carbon dioxide can be prevented and the aroma element and gas are captured within the coffee beans so as to enhance the aroma and flavor of the coffee beans.

In the above method of the present invention, it is preferable that in the step of cooling the batch, the cooling tank is cooled beforehand and the batch of the roasted beans are then cooled in the cooling tank having been cooled beforehand. Precooling the cooling tank beforehand in a first half of the time that the beans of a first batch are roasted, results in the rapid cooling of the beans in combination with the cooling in a second half of the time, and improves the cooling efficiency of the roasted beans. Moreover, by reducing the circulation amount of the cold air during the precooling step of the first half, more brine can be produced in the refrigeration unit and stored, which facilitates the continuous operation of the refrigeration unit.

In the above method of the present invention, it is also preferable that the method further comprises the steps of: removing solid content such as removed shells of the coffee beans mixed in the cold air by a centrifugal dust removal device which is arranged in the closed circulation path and which removes the solid content in the cold air without using a filter so as to suppress loss of pressure in the closed circulation path; and cleaning passages of the cold air in the heat exchanger with cleaning water while performing the roasting/cooling of the beans.
The solid contents such as removed shells of the coffee beans mixed in the cold air is removed by the centrifugal dust removal device without
removing solid content such as removed shells of the coffee beans mixed in the cold air by a centrifugal dust removal device without using a filter and thus the loss of pressure in the closed circulation path is reduced. Consequently, the circulation amount of the cold air is maintained and the cooling of the roasted beans is stabilized. Even when a traditional centrifugal dust removal device which uses the outdoor air for cooling, the device can be used as is and does not require a filter to be newly installed.

Further, the solid content such as removed shells of the coffee beans and oil content adhering in the closed circulation path can be cleaned very easily in the cleaning step.
In the roasting step, when the beans having been roasted are discharged to the cooling tank from the roasting machine, the roasted coffee beans may get ignited. In order to prevent this, cooling water is sprayed to the beans in the cooling tank when the roasted beans are discharged therein. This cooling water may get in the closed circulation path from the cooling tank and forms ice on an inner surface of the passages of the cold air in the heat exchanger.

Therefore, it is preferable in the step of cleaning the passages of the cold air, heated water is used as the cleaning water so as to defrost ice formed in the passages of the cold air in addition to the removing of the oil and solid contents.

As a instantly adoptable device to perform the above method of the present invention, the present invention also proposes a roasting/cooling device of beans comprising: a roasting machine for roasting beans; a cooling tank for cooling the roasted beans; a closed circulation path for cold air which is connected to the cooling tank; a heat exchanger which is arranged in the closed circulation path and cools the cold air by heat exchange with cryogenic brine; a feed blower and a return blower which are respectively provided in the closed circulation path on an upstream side and a downstream side of the heat exchanger; a heat storage tank which is connected to the heat exchanger via a brine circulation path so as to supply the cryogenic brine to the heat exchanger; a refrigeration unit for cooling the cryogenic brine in the heat storage tank; and a temperature sensor for detecting temperature of the cold air at an inlet of the cooling tank, wherein a flow rate and temperature of the cryogenic brine being supplied to the heat exchanger is controlled so that the temperature of the cold air detected by the temperature sensor becomes a set value.

In the present invention, the heat storage tank for the cryogenic brine is provided to store the brine being cooled in the refrigeration unit. By supplying the cryogenic brine from the heat storage tank to the heat exchanger, the cryogenic brine can be supplied in a stable manner and the stable operation of the cooling step can be achieved.
Further, in view of the pressure loss of the cold air at the heat exchanger, the feed blower and the return blower are respectively provided on the upstream side and the downstream side of the heat exchanger in the passages of the cold air in the heat exchanger so as to stabilize the circulation of the cold air.

Furthermore, the temperature of the cold air at the inlet of the cooling tank is detected and the flow rate and temperature of the cryogenic brine being supplied to the heat exchanger is controlled so that the detected temperature becomes a set temperature. In this manner, the temperature of the cold air can be controlled with high precision.
With this, the cooling of the roasted beans can be firmly performed. Thus, not only the cooling of the beans having been roasted can be performed simultaneously with the roasting of the beans of the next batch in the roasting machine, but also the cooling period can be coincided with the roasting period so as to perform the roasting of the beans in a continuous manner. As a result, the high efficient operations of performing the roasting/cooling method can be obtained. Moreover, the roasted beans are rapidly cooled by the cold air circulating in the closed circulation path so that the aroma and flavor of the roasted beans is enhanced.

It is preferable that the above device of the present invention further comprises: a centrifugal dust removal device provided between the cooling tank and the feed blower in the closed circulation path; a cleaning mechanism which includes: a cleaning water supply path for supplying cleaning water to the heat exchanger; a cleaning water circulation path for circulating the cleaning water to passages of the cold air in the heat exchanger.
With this, the solid contents such as removed shells of the coffee beans mixed in the cold air is removed by the centrifugal dust removal device without using a filter and thus the loss of pressure in the closed circulation path is reduced. Consequently, the circulation amount of the cold air is maintained and the cooling of the roasted beans is stabilized while the closed circulation path is kept clean.

In the above device of the present invention, it is preferable that a shell-and-tube heat exchanger is used as the heat exchanger to perform heat exchange between the cold air for cooling and the cryogenic brine. In this, the cold air is introduced into the tubes while the cryogenic brine is introduced to outside of the tubes. With this, the heat exchanger can be cleaned more easily and the time for cleaning can be shortened.

It is also preferable that the above device of the present invention further comprises a device such as a boiler for producing heated water to be used as the cleaning water for cleaning the passages of the cold air so as to defrost ice formed in the passages of the cooling air, the ice being formed when cooling water is sprayed into the cooling tank.
With this, the removing of the oil and solid contents in the cold air can be performed as well as the defrosting of the ice formed in the passages of the cold air.

### Effects of the invention

According to the roasting/cooling method of the present invention of cooling the roasted beans quickly by circulating the cold air while closing the cold air from the outdoor air, the cold air is cooled by the cryogenic brine in the heat exchanger arranged in the closed circulation path, the temperature of the cold air is detected at the inlet of the cooling tank so that the detected inlet temperature has a set value by controlling the flow rate and temperature of the cryogenic brine being supplied to the heat exchanger and controlling the circulation amount and pressure of the cold air in the closed circulation path by the blowers respectively provided on the upstream side and downstream side of the heat exchanger in the closed circulation path, and a batch of the beans having been roasted is cooled simultaneously with roasting of the beans of a next batch by roasting device so as to perform a roasting/cooling process of the beans in a continuous manner. By this, the roasting/cooling process can be performed efficiently at a low cost and at the same time, the excellent aroma and flavor is packed in the roasted beans and thus the commercial value of the products is enhanced.

Moreover, according to the present invention, with the structure of the roasting/cooling device of beans comprising: a roasting machine for roasting beans; a cooling tank for cooling the roasted beans; a closed circulation path for cold air which is connected to the cooling tank; a heat exchanger which is arranged in the closed circulation path and cools the cold air by heat exchange with cryogenic brine; a feed blower and a return blower which are respectively provided in the closed circulation path on an upstream side and a downstream side of the heat exchanger; a heat storage tank which is connected to the heat exchanger via a brine circulation path so as to supply the cryogenic brine to the heat exchanger; a refrigeration unit for cooling the cryogenic brine in the heat storage tank; and a temperature sensor for detecting temperature of the cold air at an inlet of the cooling tank, wherein a flow rate and temperature of the cryogenic brine being supplied to the heat exchanger is controlled so that the temperature of the cold air detected by the temperature sensor becomes a set value, the cooling of the beans having been roasted and the roasting of the beans of the next batch can be performed simultaneously. Thus, not only the continuous roasting/cooling of the beans can be achieved and the roasting/cooling of the beans can be operated highly efficiently at a low cost, but the excellent aroma and flavor of the beans can be captured in the roasted beans.

### BRIEF DESCRIPTION OF THE DRAWINGS

[FIG. 1] An overall structure of a roasting/cooling device of coffee beans in relation to a preferred embodiment of the present invention.
[FIG.2] A configuration diagram of a cleaning mechanism of the roasting-cooling device of the preferred embodiment.
[FIG. 3] A diagram showing an operation sequence of the preferred embodiment.
[FIG. 4] A overall structure of a conventional roasting/cooling device of coffee beans.

### DETAILED DESCRIPTION OF THE PREFERRED EMBODIMENTS

A preferred embodiment of the present invention will now be described in detail with reference to the accompanying drawings. It is intended, however, that unless particularly specified, dimensions, materials, shape, its relative positions and the like shall be interpreted as illustrative only and not limitative of the scope of the present.

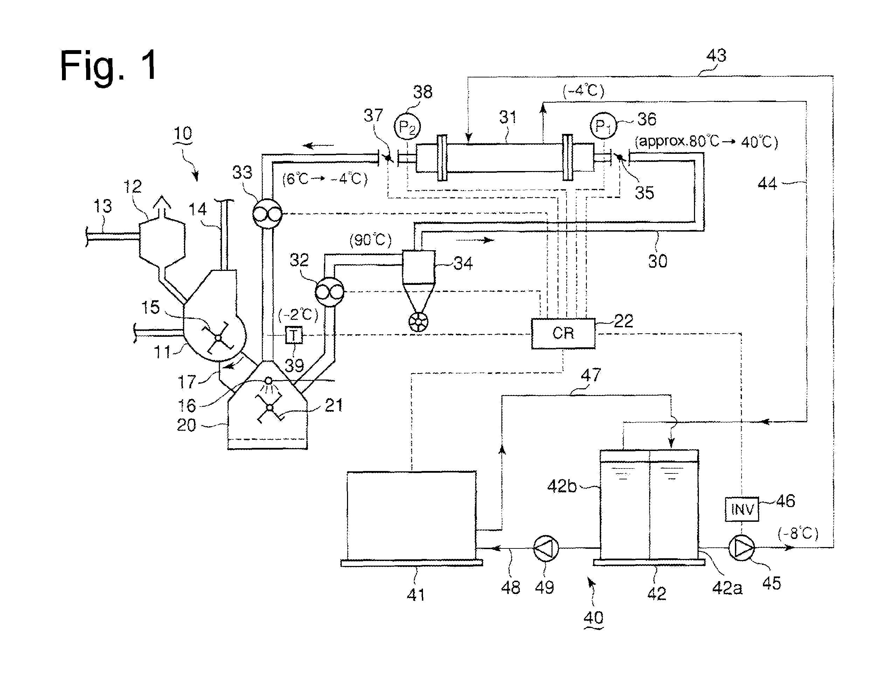

One preferred embodiment in which the present invention is applied to a roasting/cooling device of coffee beans will be described in reference to FIG. 1 to FIG.3. FIG. 1 illustrates a roasting/cooling device 10 of coffee beans in relation to the preferred embodiment. The roasting/cooling device 10 mainly includes a roasting machine 11, a cooling tank 20, a closed circulation path 30 for circulating cold air for cooling, and a brine supply unit 40 for producing cryogenic brine. The roasting machine 11 comprises a hopper 12 for temporarily storing coffee beans prior to roasting, and coffee beans are fed to the hopper 12 through a passage 13. A set amount of coffee beans is supplied batch-wise to the roasting machine 11 from the hopper 12 and roasted in the roasting machine 11.

The roasting machine 11 houses an agitator 15 so that the coffee beans are agitated while being roasted. The coffee beans having been roasted are fed to the cooling tank 20 by opening a discharge port 17. During this step, the roasted coffee beans of high temperature get exposed to the air, which might cause the beans to get ignited. In order to prevent this, cooling water is sprayed to the beans through a nozzle 16. A centrifugal dust removal device (cyclone) 53, a dust collector of a filter type 55 and a deodorizer 56 are arranged in an exhaust air path 14 for discharging exhaust air from inside of the roasting machine 11 so as no only to remove bean shells and the like but also to deodorize and discharge the exhaust air.

Inside the cooling tank 20, the cold air is constantly supplied from the closed circulation path 30 and the roasted coffee beans are cooled while being agitated by the agitator 21. The closed circulation path 30 forms a closed space and together with the cooling tank 20 forms an enclosed space.
In the closed circulation path 30, a heat exchanger 31 for cooling the cold air with cryogenic brine is provided and also a feed blower 32 and a return blower 33 are provided, respectively, on an upstream side and a downstream side of the heat exchanger 31 so as to form a circulation flow of the cold air in the direction indicated with an arrow. The centrifugal dust removal device (cyclone) 34 without a filter is arranged in the circulation path 30 between the feed blower 32 and the heat exchanger 31 so as to remove any solid in the cold air such as removed bean shells and the like.

Dampers 35 and 37 for adjusting the amount of the cold air and pressure sensors 36 and 38 for detecting pressure of the cold air in the closed circulation path are respectively provided on an inlet side and an out let side of the heat exchanger 31. Further, a temperature sensor 39 for detecting a temperature of the cold air is provided on an inlet side of the cooling tank 20 in the closed circulation path 30. Furthermore, the heat exchanger 31 is composed by a shell-and-tube heat exchanger.

The brine supply unit 40 includes a refrigeration unit 41, a brine tank 42, and a brine supply path 43 and a brine return path 44 to connect the brine tank 42 and the heat exchanger 31. The brine supply path 43 and the brine return path 44 form a brine circulation path.
The brine tank 42 has a cold-brine tank 42a and a hot-brine tank 42b and the cryogenic brine having been cooled in the refrigeration unit 41 is sent to the cold-brine tank 42a through a path 47, and then stored in the cold-brine tank 42a. The cryogenic brine stored in the cold-brine tank 42a is fed to the heat exchanger 31 via the brine supply path 43, and used to cool the cold air in the heat exchanger 31.

The brine having been heated from the heat exchange with the cold air in the heat exchanger 31, is returned to the hot-brine tank 42b via the brine return path 44. The brine stored in the hot-brine tank 42b is transferred to the refrigeration unit 41 via a path 48 having a pump 49 therein so as to be cooled in the refrigeration unit 41.
Moreover, a pump 45 and an inverter device 46 for controlling the pump 45 to adjust the discharge rate, are provided in the brine supply path 43.

With this structure, the pressure sensors 36 and 38 detect the pressure of the cold air in the closed circulation path 30 on the upstream side and the downstream side of the heat exchanger 31, and the temperature sensor 39 detects the temperature of the cold air at the inlet of the cooling tank 20 and the detected signals are sent to a control unit 22.
The temperature of the cold air immediately after roasting beans is 90°C in the path between the blower 32 and the cyclone 34, and then lowered to about 80°C at the inlet of the heat exchanger, and finally becomes about 5°C at the outlet of the heat exchanger. The control unit 22 controls the inverter device 46 to adjust the discharge rate of the pump 45 based on the temperature of the cold air having been detected by the temperature sensor 39 so that the temperature of the cold air at the inlet of the cooling tank 20 is -2°.

In this manner, as the cooling of the cold air progresses, the temperature thereof is controlled to be 40°C at the inlet of the heat exchanger, -4°C at the outlet of the heat exchanger, -2°C at the inlet of the cooling tank. Further, the control unit 22 controls the cooling capacity of the refrigeration unit 41, the discharge rate of the feed blower 32 and the return blower 33, an opening of the damper 35 and 37 and the discharge rate of the pump 45 so that the temperature of the cryogenic brine is -8°C at the outlet of the cold-brine tank 42a and the temperature of the brine out of the heat exchanger 31 is -4°C.

The control unit 22 further controls the feed blower 32, the return blower, and the dampers 35 and 37 so that the pressure of the cold air is equal to atmospheric pressure in the closed circulation path on the upstream side and downstream side of the heat exchanger 31 and in the cooling tank 20.
In this manner, the beans immediately after being roasted, are rapidly cooled by the cold air for cooling so that the flavor and aroma of the roasted beans does not dissipate.

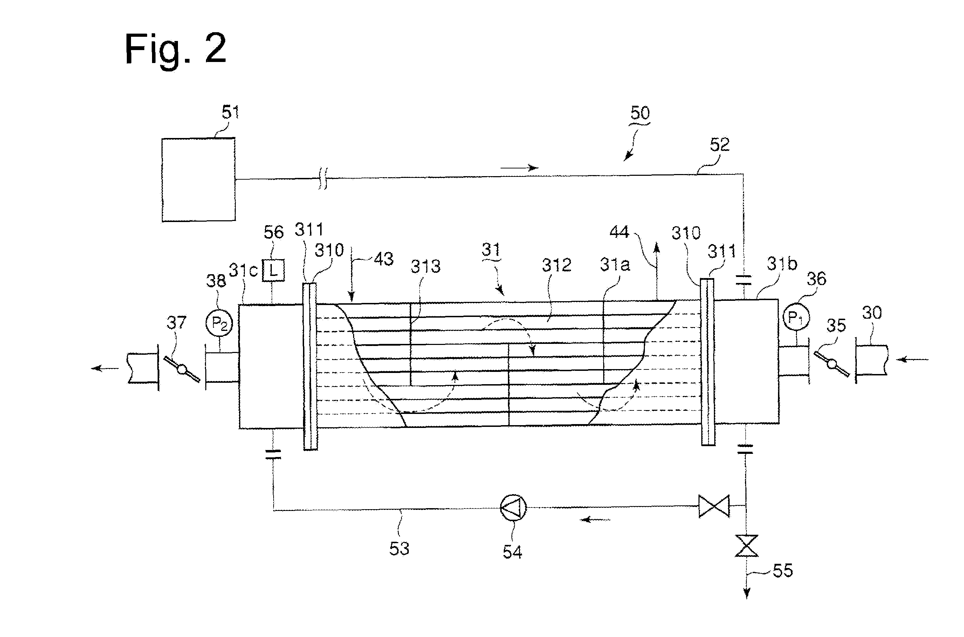

Now, the cleaning mechanism 50 of the heat exchanger 31 will be explained in reference to FIG.2. In FIG.2, the heat exchanger 31 is a shell-and-tube heat exchanger and composed by assembling tube plates 310 of a mid-section 31a and flanges 311 of channel covers 31b and 31c respectively formed on both ends of the mid-section 31a. Inside the mid-section 31a, a plurality of tubes 312 for cold air are arranged in parallel in the length direction thereof between the tube plates 310 and the cold air for cooling is introduced into the tubes 312. A supply pipe 52 for heated water is connected to the channel cover 31b and the heated water having been produced in the boiler 51 is supplied into the tubes 312 for cold air of the mid-section 31a and the channel covers 31b and 31c via the supply pipe 52 for heated water.

Furthermore, a heated water circulation path 53 is provided to connect the channel covers 31b and 31c arranged on both ends of the mid-section 31a, and a pump 54 is arranged in the heated water circulation path 53. Inside the mid-section 31a, a plurality of baffles 313 are arranged in the radial direction of the mid-section and the cryogenic brine supplied to the mid-section 31a is directed around the baffles 313 so as to improve the heat exchange efficiency with the cold air.

In this manner, when the heat exchanger 31 is to be cleaned, the closed circulation path 30 is closed by the dampers 35 and 37, and then the heated water supplied to the channel covers 31b and 31c is introduced through the heated water circulation path 53 and the cold air tubes 312 inside the heat exchanger 31 so as to clean the inner wall of the cold air tubes 312. Further, a heated-water level meter 56 is arranged on the channel cover 31c to check the remaining amount of the heated water. When the cleaning of the heat exchanger 31 is finished, the heated water is discharged from a discharge pipe 55.

In the preferred embodiment with the above structure, a set amount of coffee beans is supplied batch-wise to the roasting machine 11 from the hopper 12 and roasted in the roasting machine 11. Subsequently, the discharge port 17 is opened to transfer the roasted beans to the cooling tank. During this step, in order to prevent the roasted beans from getting ignited, cooling water is sprayed to the beans through the nozzle 16.

In the cooling tank 20, the coffee beans having been roasted are rapidly cooled by the cold air circulating in the closed circulation path 30. Further, the cold air is cooled by the heat exchange with cryogenic brine in the heat exchanger 31. Furthermore, in the brine supply unit 40, the refrigeration unit 41 produces the cryogenic brine and the cryogenic brine is then stored in the brine tank 42. The cryogenic brine stored in the brine tank 42 is supplied to the heat exchanger 31 via the brine supply path 43.

In the preferred embodiment, the pressure of the cold air in the closed circulation path 30 is detected on the upstream side and downstream side of the heat exchanger 31, and the detected signals are sent to the control unit which then controls the feed blower 32 and the return blower 33 to regulate the flow amount of the cold air so as to maintain the pressure at the outlet of the heat exchanger 31 approximately equal to atmospheric pressure. By this, the pressure inside the cooling tank 20 can be maintained around the atmospheric pressure and thus the cold air circulation mechanism can be adopted without making an alternation to the cooling tank 20 such as reinforcing the structure thereof.

In this case, the traditional centrifugal dust removal device 34 which is used for cooling with outdoor air, can be used without making modification thereof and thus the pressure loss in the closed circulation path 30 can be reduced. As a result, the controlling of the pressure of the cold air in the closed circulation path 30 is made easier.

Moreover, the temperature of the cold air at the inlet of the cooling tank is detected by the temperature sensor 39 and the control unit 22 controls the inverter device 46 to adjust the discharge rate of the pump 45 so that the temperature of the cold air at the inlet of the cooling tank 20 is -2°. By this, the roasted coffee beans are rapidly cooled, and the high aroma and flavor of the coffee beans can be packed in the beans.

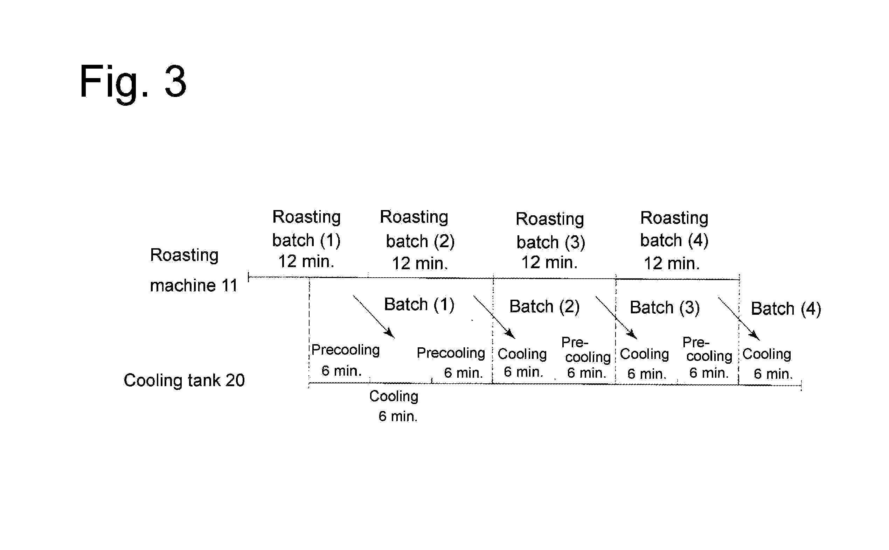

In this manner, the temperature and pressure of the cold air in the closed circulation path 30 can be controlled with high precision and thus, in the preferred embodiment, the operation sequence shown in FIG.3 can be adopted. The operation sequence is explained in reference to FIG.3. In FIG.3, the roasting of the beans is performed for 12 minutes per batch in the roasting machine 11. While the batch (1) is being roasted, the cooling tank 20 is precooled, e.g. for 6 minutes. Immediately after the roasting of the batch (1) is completed, the batch (1) is cooled in the cooling tank 20, e.g. for 6 minutes.

While the cooling tank 20 is being precooled, the flow amount at the feed blower 32 and the return blower 33 is set to minimum, and while the batch is being cooled, the flow amount at the feed blower 32 and the return blower 33 is set to maximum.
Further, during the precooling of the cooling tank, the refrigeration unit 41 is operated to produce the cryogenic brine and the cryogenic brine is then stored in the cold brine tank 42a so as to compensate for the shortfall in the cryogenic brine production during the cooling step.
In this manner, continuous roasting and cooling of the beans can be achieved, so that the operation efficiency is improved. Moreover, the cooling tank is precooled beforehand and thus in the next batch, the cooling can be performed smoothly thereby achieving the rapid cooling of the beans and also improving the cooling efficiency of the roasted beans.

As illustrated in FIG.3, the roasting of one batch is performed for 12 minutes and each of the precooling of the cooling tank and the cooling of the roasted beans is performed for 6 minutes. Then, five batches of coffee beans can be roasted and cooled in one hour. The roasting/cooling device 10 is operated for 22 hours per day and then cleaned for 2 hours. With this structure, the roasting/cooling device 10 can be operated on consecutive days.

According to the preferred embodiment, the roasted beans are cooled by the cold air circulating in the closed circulation path 30 and thus the cooling of the beans is not affected by the temperature of the outdoor air. Therefore, the roasting time and the cooling time is maintained constant regardless of the seasons, resulting in stabilizing the operation of the device, and the temperature of the cold air is kept constant regardless of the outdoor temperature, resulting in stabilizing the quality of the beans having been roasted.
Moreover, the aroma element that has once left the coffee beans, circulates in the closed circulation path 30 and returns to the cooling tank 20 where it is absorbed back in the coffee beans. Thus, the dissipation of the aroma element and gas such as carbon dioxide can be prevented and the aroma element and gas are captured within the coffee beans so as to enhance the aroma and flavor of the coffee beans.

Further, this structure does not require a deodorizer in the closed circulation path and thus the running cost and maintenance cost of the deodorizer can be saved.
Furthermore, the shell-and-tube heat exchanger is used as the heat exchanger 31, which makes the cleaning thereof much easier. Not only the solid content such as removed shells of the coffee beans and oil content adhering in the closed circulation path can be cleaned very easily and the cleaning time can be shortened. The heated water is used for cleaning so as to defrost ice being formed in the passages of the heat exchanger 31 when cooling water is sprayed into the roasting machine.

### Industrial Applicability

According to the present invention, in the roasting/cooling method of beans such as coffee beans, it is possible to achieve continuous operation of the roasting/cooling device, improve the performance thereof and enhance the aroma and flavor of the roasted beans.

## Claims

1. A roasting/cooling method for roasting beans and rapidly cooling the roasted beans in a cooling tank that is arranged in a closed circulation path for cold air by circulating the cold air in the closed circulation path, the method comprising the steps of:
cooling the cold air with cryogenic brine in a heat exchanger arranged in the closed circulation path for the cold air;
detecting a temperature of the cold air at an inlet of the cooling tank;
controlling flow rate or temperature of the cryogenic brine being supplied to the heat exchanger so that the detected temperature of the cold air becomes a set temperature;
controlling a circulating amount and pressure of the cold air in the closed circulation path by blowers that are respectively provided in the closed circulation path on an upstream side and a downstream side of the heat exchanger; and
cooling a batch of the beans having been roasted simultaneously with roasting of a next batch of the beans by a roasting device so as to perform a roasting/cooling process of the beans in a continuous manner.

2. The roasting/cooling method according to claim 1, wherein in the step of cooling the batch, the cooling tank is cooled beforehand and the batch of the roasted beans are then cooled in the cooling tank having been cooled beforehand.

3. The roasting/cooling method according to claim 1 or 2, further comprising the steps of:
removing solid content mixed in the cold air by a centrifugal dust removal device which is arranged in the closed circulation path and which removes the solid content in the cold air without using a filter so as to suppress loss of pressure in the closed circulation path; and
cleaning passages of the cold air in the heat exchanger with cleaning water while performing the roasting/cooling of the beans.

4. The roasting/cooling method according to claim 3, wherein in the step of cleaning the passages of the cold air, heated water is used as the cleaning water so as to defrost ice formed in the passages of the cold air, the ice being formed when cooling water is sprayed into the roasting machine or the cooling tank.

5. A roasting/cooling device of beans comprising:
a roasting machine for roasting beans;
a cooling tank for cooling the roasted beans;
a closed circulation path for cold air which is connected to the cooling tank;
a heat exchanger which is arranged in the closed circulation path and cools the cold air by heat exchange with cryogenic brine;
a feed blower and a return blower which are respectively provided in the closed circulation path on an upstream side and a downstream side of the heat exchanger;
a heat storage tank which is connected to the heat exchanger via a brine circulation path so as to supply the cryogenic brine to the heat exchanger;
a refrigeration unit for cooling the cryogenic brine in the heat storage tank; and
a temperature sensor for detecting temperature of the cold air at an inlet of the cooling tank,
wherein a flow rate and temperature of the cryogenic brine being supplied to the heat exchanger is controlled so that the temperature of the cold air detected by the temperature sensor becomes a set value.

6. The roasting/cooling device of the beans according to claim 5, further comprising:
a centrifugal dust removal device provided between the cooling tank and the feed blower in the closed circulation path;
a cleaning mechanism which includes: a cleaning water supply path for supplying cleaning water to the heat exchanger; a cleaning water circulation path for circulating the cleaning water to passages of the cold air in the heat exchanger.

7. The roasting/cooling device of the beans according to claim 5 or 6, wherein the heat exchanger includes a shell-and-tube heat exchanger having tubes, the cold air being introduced into the tubes while the cryogenic brine being introduced to outside of the tubes.

8. The roasting/cooling device of the beans according to claim 6 or 7, further comprising
a device for producing heated water to be used as the cleaning water for cleaning the passages of the cold air so as to defrost ice formed in the passages of the cooling air, the ice being formed when cooling water is sprayed into the roasting machine or the cooling tank.
